# EUROPEAN PATENT APPLICATION

(11) **EP 4 745 814 A1**
(43) Date of publication of application: **20.05.2026**
(21) Application number: 25202859.2
(22) Date of filing: 17.09.2025
(51) Int. Cl.: G06F 21/60, G06F 12/109, G06F 12/14, H04L 9/14

(54) **CXL DEVICE AND OPERATING METHOD THEREOF FOR PROTECTING DATA USING MEMORY ENCRYPTION**

(30) Priority: 15.11.2024 KR 20240163367
(71) Applicant: Samsung Electronics Co., Ltd., Suwon-si, Gyeonggi-do 16677 (KR)
(72) Inventor: LEE, Yongjae, 16677 Suwon-si (KR); KIM, Kyoungbum, 16677 Suwon-si (KR); BAE, Mungyu, 16677 Suwon-si (KR); LEE, Sukkyu, 16677 Suwon-si (KR); CHO, Wonhee, 16677 Suwon-si (KR); KIM, Jisoo, 16677 Suwon-si (KR); CHU, Younsung, 16677 Suwon-si (KR)
(74) Representative: Marks & Clerk LLP

(57) **Abstract**

The present disclosure relates to Compute Express Link (CXL) devices configured to protect data by using data encryption, and operating methods thereof. An example CXL device includes a volatile memory, which is connected to a plurality of channels, and a CXL controller. The CXL controller includes a CXL sub-system controller configured to search for a first key index in a key index table, based on first host data and a first device physical address, and a memory sub-system controller configured to search for at least one first key in a key table based on the first key index and generate first encrypted data based on first data, a first device physical address, at least one first key, and an encryption algorithm.

## Description

### BACKGROUND

According to the development of technologies such as Artificial Intelligence (AI), big data, and Edge Computing, there have been increasing demands for rapidly processing and storing a great amount of data in devices. High bandwidth applications configured to execute complicated computing require more rapid data processing and more efficient memory access. To this end, research and development has been conducted on Compute Express Link (CXL) devices, i.e., electronic devices configured to support CXL.

CXL devices, based on CXL interfaces, connect various processors and devices and provide flexible expansion of memory capacities and optimized memory management. Such CXL devices are required to comply with the terms defined in the CXL standard, and numerous members update the contents of the CXL standard through meetings. By further including CXL devices, the efficiency in the management of data centers in existing server systems may be improved only with minimal costs. In addition, CLX controllers in CXL devices secure stable data management environments by providing improved reliability and enhanced security.

The CXL standard provides a memory encryption function to protect data. Currently, target-based memory encryption is supported as one of memory encryption methods according to the CXL standard. The target-based memory encryption is a sub-function that is subject to functions of Trusted Execution Environment (TEE) Security Protocol (TSP). Therefore, it is impossible to perform the target-based memory encryption without the TSP functions. In addition, the target-based memory encryption is not supported in a Multi Logical Device (MLD) environment or memory sharing. Furthermore, a host device is configured to designate a key and a key index used for the target-based memory encryption and to manage the key index.

### SUMMARY

The present disclosure relates to a Compute Express Link (CXL) device and an operating method thereof to support various types of memory encryption and protect data by using memory encryption in all CXL environments.

In general, according to some aspects, a Compute Express Link (CXL) device includes a volatile memory connected to a plurality of channels and a CXL controller configured to receive first host data, first data, and a first host physical address from a first host device among a plurality of host devices and provide a command address signal and first encrypted data to the volatile memory through a channel selected from among the plurality of channels. The controller includes a CXL sub-system controller configured to obtain a first key index set for the first host device, based on at least one key index table for a key index, the first host data, and a first device physical address mapped to the first host physical address, and output the first device physical address and the first key index, and a memory sub-system controller configured to obtain at least one first key set for the first host device, based on a key table for at least one key set for each of a plurality of key indices of the at least one key index table and the first key index, and generate the first encrypted data, based on the first data, the first device physical address, the at least one first key, and an encryption algorithm. The CXL sub-system controller may output the first device physical address and the first key index to the memory sub-system controller.

In general, according to some aspects, a CXL device includes a volatile memory connected to a plurality of channels and a CXL controller configured to receive first host data and a first host physical address from a first host device among a plurality of host devices and provide a command address signal to the volatile memory through a channel selected from among the plurality of channels. The CXL controller includes a CXL sub-system controller configured to obtain a first key index set for the first host device, based on at least one key index table for a key index, the first host data, and a first device physical address mapped to the first host physical address, and output the first device physical address and the first key index; and a memory sub-system controller configured to obtain at least one first key set for the first host device, based on a key table for at least one key for each of a plurality of key indices of the at least one key index table and the first key index, and decrypt the first encrypted data, based on first encrypted data, the first device physical address, the at least one first key, and the encryption algorithm provided from the volatile memory.

In general, according to some aspects, an operating method of a Compute Express Link (CXL) device including a volatile memory and a CXL controller includes receiving first host data and a first host physical address from a first host device, converting the first host physical device into a first device physical address for the volatile memory, obtain a first key index set for the first host device, based on at least one key index table for the key index, the first host data, and the first device physical address, obtain at least one first key set for the first host device, based on a key table for at least one key set for each of a plurality of key indices of the at least one key index table and the first key index, and performing an encryption operation based on the at least one first key and an encryption algorithm. A CXL sub-system of the CXL controller may receive the first host data and the first host physical address from the first host device. The converting may be performed by the CXL sub-system controller. The obtaining the first key index may be performed by the CXL sub-system controller. The obtaining the at least one first key and the first key index may be performed by a memory sub-system controller of the CXL controller. The memory sub-system controller may perform the encryption operation.

In one implementation of the operating method of the CXL device, performing the encryption operation comprises: encrypting first data from the host device; and decrypting first encrypted data from the volatile memory.

At least some of the above and other features of the disclosure are set out in the claims.

### BRIEF DESCRIPTION OF THE DRAWINGS

Implementations will be more clearly understood from the following detailed description taken in conjunction with the accompanying drawings.
FIG. 1 is a block diagram illustrating an example of a Compute Express Link (CXL) system.
FIG. 2 is a block diagram illustrating an example of a CXL fabric system.
FIG. 3 is a block diagram of an example of a CXL sub-system controller and a memory sub-system controller.
FIG. 4 is a diagram illustrating an example of a single key index table.
FIG. 5 is a diagram illustrating an example of a plurality of key index tables.
FIG. 6 is a diagram illustrating an example of a key table.
FIG. 7 is a ladder diagram for describing an example of a method of setting a new key.
FIG. 8 is a diagram for describing an example of setting a key used for Context Key Identifier (CKID)-based memory encryption.
FIG. 9 is a diagram for describing an example of setting a key used for range-based memory encryption.
FIG. 10 is a diagram for describing an example of setting a key used for device physical address-based memory encryption.
FIG. 11 is a ladder diagram for describing an example of a method of storing encrypted data.
FIG. 12 is a diagram for describing an example of encrypting data by using CKID-based memory encryption.
FIG. 13 is a diagram for describing an example of encrypting data by using range-based memory encryption.
FIG. 14 is a diagram for describing an example of encrypting by using device physical address-based memory encryption.
FIG. 15 is a ladder diagram for describing an example of a method of providing decrypted data.

### DETAILED DESCRIPTION

Hereinafter, implementations will be described in detail with reference to the accompanying drawings.

Terms used in the present specification are intended to only describe some implementations, and are not construed to limit the claimed subject matters. As used in the present specification, singular forms "a," an," and "the" are intended to encompass plural forms, unless explicitly intended otherwise in the context.

Terms such as "first" and "second" used herein are used labels following nouns, and unless explicitly defined like this, do not indicate certain types of orders (e.g., spatial orders, temporal orders, logical orders, and the like). For example, a first component and a second component may respectively indicate different components, regardless of orders or importance. For example, without departing from the scope written in the present specification, the first component may be named as the second component, and similarly, the second component may also be named as the first component.

As used herein, "module" indicates an arbitrary combination of software, firmware, and/or hardware configured to provide functions described in the present specification regarding the module. For example, software may be implemented as a software package, code, and/or an instruction set or an instruction, and the term "hardware" used in arbitrary implementations described in the specification may include, for example, an assembly, a wired circuit, a programmable circuit, a state machine circuit and/or firmware configured to store instructions executed by the programmable circuit, separately or in arbitrary combinations. Collectively or individually, a module may be implemented as a circuit that is a part of a greater system, e.g., an integrated circuit (IC), a System-On-Chip (SoC), an assembly, and the like.

Terms such as "comprises" and/or "comprising" used herein specify the existence of features, integers, procedures, processes, operations, elements, and/or components specified herein, but are not to preclude the existence or addition of one or more other features, integers, processes, operations, elements, and/or groups thereof.

When an element is referred to as "being on," "connected to," or "coupled to," and "responsive or in response to" another element, the element may be directly on, connected to, coupled to, or responsive or in response to the other element, or an intervening element may be therebetween. On the other hand, when an element is referred to as being "directly on," "directly connected to," "directly coupled to," and "directly responsive to" another element, there may be no intervening element therebetween. As used herein, the term "and/or" includes one or more arbitrary and any combinations of related items listed herein. Furthermore, the symbol "/" (e.g., when used as in the term "source/drain" will be understood to be equivalent to the term "and/or".

Throughout the specification, the mention about "one implementation" or "an implementation" indicates that specific features, structures, or characteristics described with reference to the implementations may be included in at least one implementation disclosed herein.

Furthermore, it is to be further stated that various figures (including component diagrams) in the present disclosure are only used to provide examples and are not illustrated according to scales. For example, sizes of some of the elements may be exaggerated than other elements for clarity.

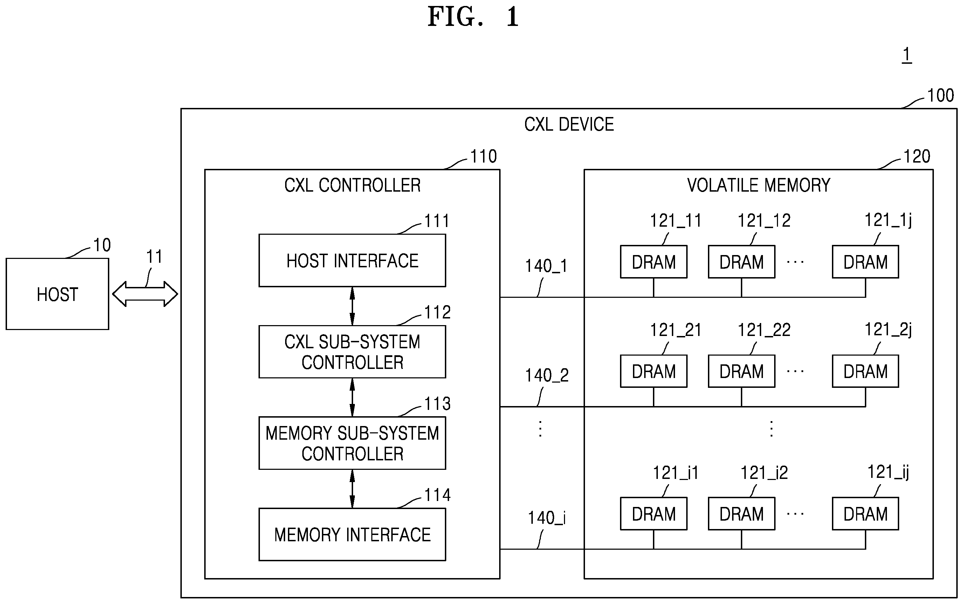

FIG. 1 is a block diagram illustrating an example of a Compute Express Link (CXL) system 1.

Referring to FIG. 1, the CXL system 1 may include a combination of electronic devices configured to support a CXL protocol. The electronic devices included in the CXL system 1 may communicate with each other by using the CXL protocol.

CXL, which is an open industry-supported protocol for communication based on Peripheral Component Interconnect Express (PCIe) 5.0, may provide a packet size that is fixed and relatively shorter, and as a result thereof, may provide a relatively higher bandwidth and a fixed standby time that is relatively shorter. Like this, the CXL may support cache coherence, and may be greatly suitable for generating connections to memory devices. The CXL may also be used to provide connection (i.e., fabric) between a host, an accelerator, memory devices, and network interface circuits (or a network interface controller or a network interface card (NIC)) in a server. A CXL transaction layer may include three multiplex sub-protocols simultaneously operated on a single link, and the sub-protocols may be referred to as CXL.io, CXL.cache, and CXL.memory. The CXL.io includes input/output (I/O) semantics that may be similar to PCIe, and is used for searching devices, managing interrupts, providing access by a register, initialization process, signal error process, and the like. The CXL.cache includes caching semantics, and may be used when an operator such as an accelerator accesses a host memory of a host device. The CXL.memory includes memory semantics, and may be used when the host device accesses a device memory included in a semiconductor device. Both the caching semantics and the memory semantics may be options.

The CXL system 1 may include a host 10 and a CXL device 100. The host 10 and the CXL device 100 may be connected to each other through various connection methods related to CXL. For example, a method of connecting the host 10 and the CXL device 100 to each other may include directed attaching, memory pooling, memory sharing, and/or memory fabric. Directed attaching is a method of connecting a host device and a memory with each other one-to-one through a memory expander. Memory pooling is a method of connecting a plurality of host devices with a plurality of memory pools through a memory expander and then dynamically connecting a memory block of each of the memory pools, which has a fixed size, to each of the host devices. Memory sharing is a method of connecting a plurality of host devices with a plurality of memory pools through a memory expander, dynamically allocating a memory block of each of the memory pools, which has a fixed size, to a host device, and then allocating a sharable block to allow access from different host devices. Memory fabric, i.e., a combination of memory pooling and memory sharing, is a method of simultaneously connecting different host devices with memory pools through a plurality of CXL switches.

The host 10 may be configured to process data, like a central processing unit (CPU), an application processor (AP), a System-On-a-Chip (SoC), and the like. The host 10 may be configured to execute an operating system (OS) and/or various applications. The host 10 may be connected to a host memory. The host 10 may be connected to the CXL device 100 through a CXL interface 11. The CXL interface 11 may include three types of sub-protocols, e.g., CXL.io, CXL.cache, and CXL.mem. The host 10 may be referred to as a CXL host, a host device, and the like.

In some implementations, the host 10 may be configured to communicate with the CXL device 100 by using the CXL.io and the CXL.mem. In this case, the CXL device 100 may be implemented as a memory expander that is a CXL Type 3 device.

In some implementations, the host 10 may be configured to transmit a CXL packet (or a CXL transaction) for accessing the CXL device 100, through the CXL interface 11. For example, the host 10 may be configured to provide a host physical address and a data write request to the CXL device 100, and the CXL device 100 may be configured to store data in a storage region having a device physical address that is mapped to the host physical address. For example, the host 10 may be configured to provide a read request, which includes the host physical address, to the CXL device 100, and the CXL device 100 may be configured to read the stored data and provide the read data to the host 10.

In some implementations, sub-protocols of the CXL interface 11 may include protocols according to the CXL standard of version 3.1 or above.

The CXL device 100 may include a CXL controller 110 and a volatile memory 120. The CXL device 100 may support a CXL protocol. The CXL protocol may include the CXL memory sub-protocol, i.e., CXL.memory.

The CXL controller 110 may include an Application Specific Integrated Circuit (ASIC) and/or an Intellectual Property (IP) circuit designed for implementation of a Field-Programmable Gate Array (FPGA).

In some implementations, the CXL controller 110 may include one or more of a host interface 111, a CXL sub-system controller 112, a memory sub-system controller 113, and a memory interface 114. The host interface 111, the CXL sub-system controller 112, the memory sub-system controller 113, and the memory interface 114 may transmit and/or receive data.

The host interface 111 may be configured to provide interface functions between the host 10 and the CXL device 100. The host interface 111 may be configured to receive a CXL packet provided from the host 10. The host interface 111 may be configured to provide data, which is read from the volatile memory 120, to the host 10.

The CXL sub-system controller 112 may generate at least one key (i.e., a crypto-key) used for encrypting the data or decrypting the encrypted data. For example, when the host 10 and the CXL device 100 are connected to each other, negotiation regarding the CXL protocol between the host 10 and the CXL device 100 may be conducted, and during the negotiation, the CXL sub-system controller 112 and the memory sub-system controller 113 may generate one or more keys corresponding to newly allocated storage regions in a storage region of the CXL device 100, in response to a memory allocation request from the host 10.

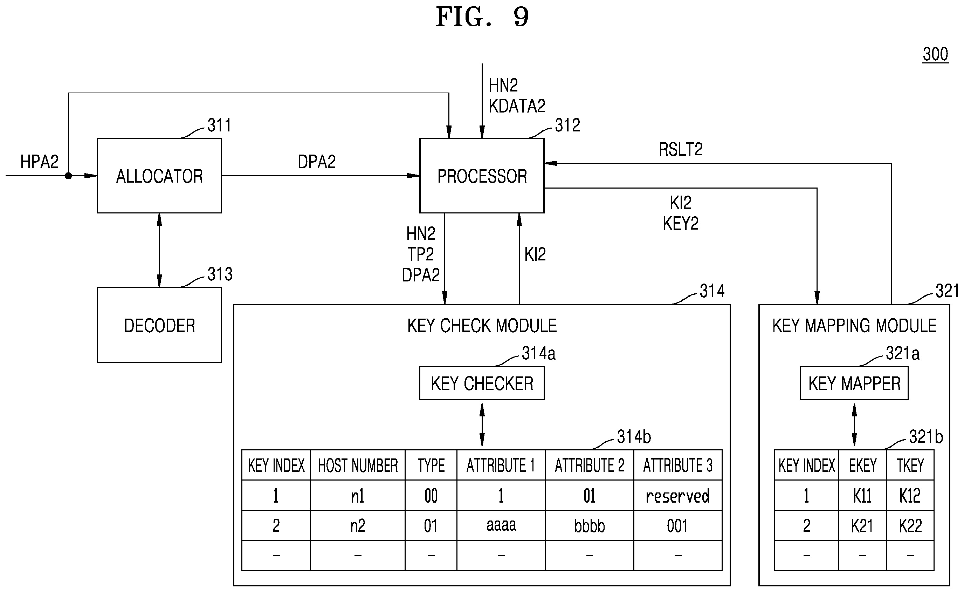

In some implementations, the CXL sub-system controller 112 may be configured to generate at least one key used for target-based memory encryption. The target-based memory encryption, which is a memory encryption method defined by the CXL standard, implements encryption by using one of Memory Encryption Algorithms Supported in a Get Target Capabilities Response, for example. Trusted Execution Environment (TEE) Security Protocol (TSP) supports two types of target-based memory encryption. For example, the target-based memory encryption may include Context Key Identifier (CKID)-based memory encryption and range-based memory encryption. CKID may include information delivered from a protocol fleet for identifying security keys used for memory encryption performed by using the TSP of the CXL standard. The CKID-based memory encryption requires use of a CKID field in a transaction layer to identify particular keys used for encryption/decryption of memory contents for given transactions. The range-based memory encryption uses memory-range registers configured to associate particular encryption keys to particular memory ranges, and is not dependent on a CKID field in the transaction. The range-based memory encryption in the present disclosure may also be referred to as host physical address-based memory encryption. The host 10 may be configured to enable the CKID-based memory encryption or the range-based memory encryption, but is not allowed to enable both of the CKID-based memory encryption and the range-based memory encryption. An implementation of generating a key related to the target-based memory encryption is described below with reference to FIG. 9.

For the target-based memory encryption, it is required that the host device designates the key and key indices used for memory encryption, and manages the key indices. For example, when the CKID-based memory encryption is used in the host device, the host device designates and manages a separate key index, i.e., CKID, and a key matching the key index. For example, when the range-based memory encryption is used in the host device, the host device designates and manages a key for the host physical address.

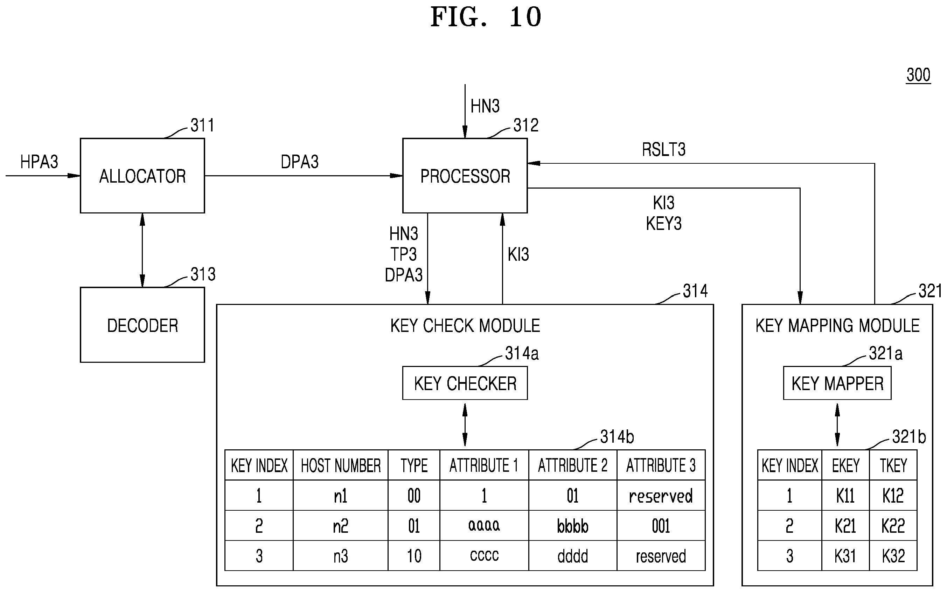

In some implementations, the CXL sub-system controller 112 may be configured to generate at least one key used for the device physical address-based memory encryption. The device physical address-based memory encryption may be a method of memory encryption based on the device physical address corresponding to the storage region of the CXL device 100. A storage region having a certain device physical address may correspond to a physical space in at least one of a plurality of DRAMs 121_11 to 121_ij (where i and j are each an integer not less than 2). An implementation of generating the key related to the device physical address-based memory encryption will be described below with reference to FIG. 10.

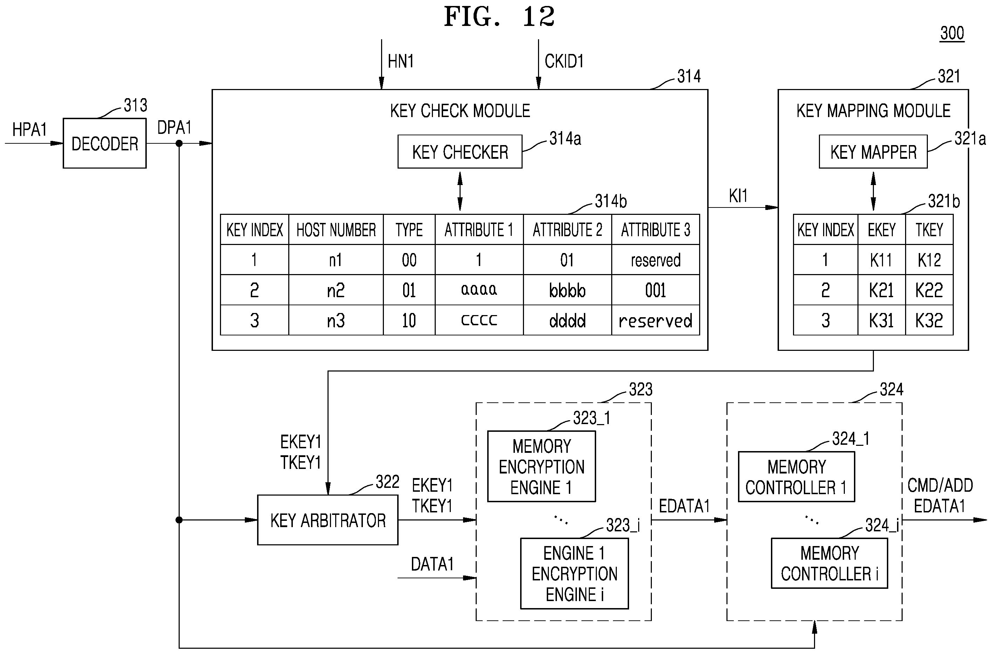

The CXL sub-system controller 112 may store a key index used for searching for at least one key to be used by the host 10. The CXL sub-system controller 112 may be configured to search for a key index stored therein, in response to a request (e.g., a write request, a read request, or the like) from the host 10. An implementation of searching the key index will be described below with reference to FIGS. 12 to 14.

The memory sub-system controller 113 may store at least one key and a key index generated by the CXL sub-system controller 112.

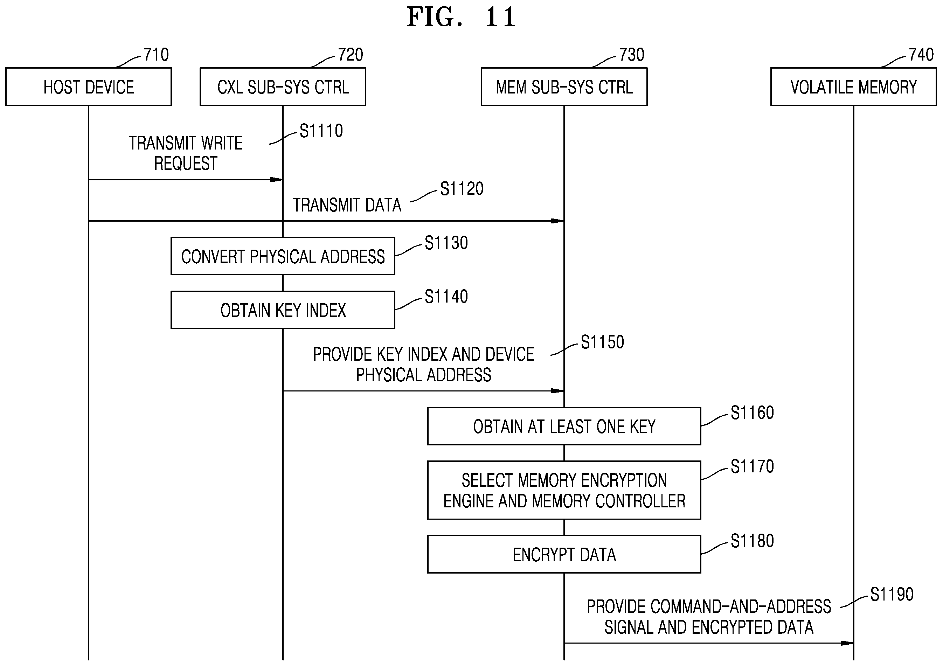

In some implementations, the memory sub-system controller 113 may be configured to encrypt the data by using the at least one key and memory encryption (e.g., an encryption algorithm). Encrypted data may be provided to the volatile memory 120. Implementations of encrypting the data will be described below with reference to FIGS. 11 to 14.

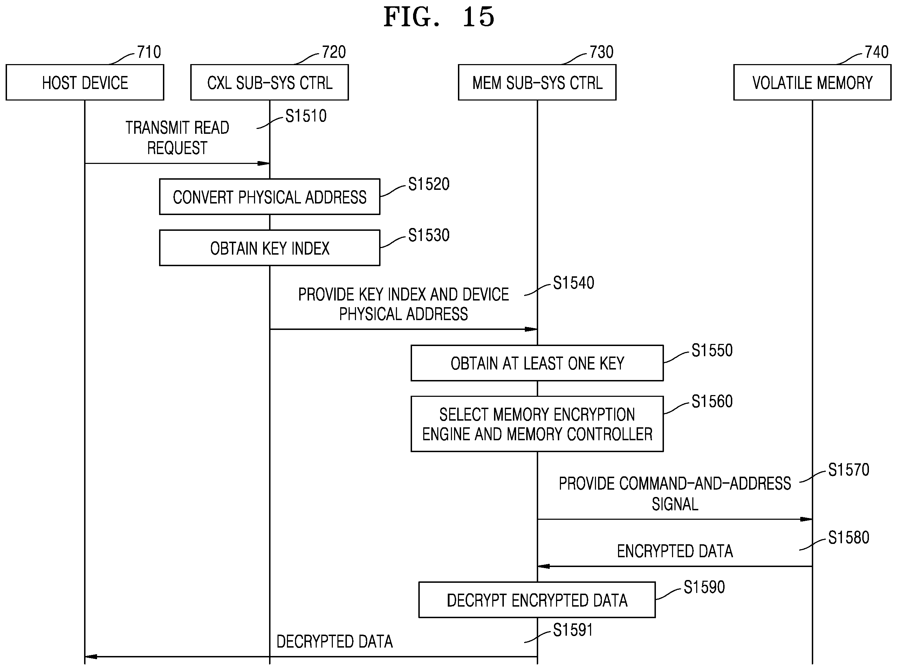

In some implementations, the memory sub-system controller 113 may be configured to decrypt the encrypted data, which has been provided from the volatile memory 120, by using the at least one key and memory encryption. The decrypted data may be provided to the host 10 through the host interface 111. Implementations of decrypting the encrypted data will be described below with reference to FIG. 15.

The memory sub-system controller 113 may be configured to provide a command address signal to the volatile memory 120. The command address signal may include a write command, a read command, and the like. For example, the memory sub-system controller 113 may be configured to output the write command, a device physical address, and encrypted data. For example, the memory sub-system controller 113 may be configured to receive the encrypted data from the volatile memory 120 after outputting the read command and the device physical address.

In FIG. 1, the CXL sub-system controller 112 and the memory sub-system controller 113 may be designed as separate components. In this case, while the memory sub-system controller 113 encrypts/decrypts current data, the CXL sub-system controller 112 may search for a key index to be used for encrypting next data. However, the present disclosure is not limited to the implementation shown in FIG. 1. In some implementations, the CXL sub-system controller 112 and the memory sub-system controller 113 may also be implemented as a single component.

The memory interface 114 may be configured to provide interface functions between the CXL controller 110 and the volatile memory 120. For example, the memory interface 114 may provide an interface between the memory sub-system controller 113 and the plurality of DRAMs 121_11 to 121_ij of the volatile memory 120. As one of ordinary skill will appreciate, the memory interface 114 may be omitted such that the controllers 112, 113 communicate directly with the host 10 and/or volatile memory 120.

When the host 10 provides the write request to the CXL device 100, the encrypted data may be provided to at least one DRAM connected to a channel selected from among a plurality of channels 140_1 to 140_i.

When the host 10 provides the read request to the CXL device 100, the encrypted data may be provided from the at least one DRAM, which is connected to the channel selected from among the plurality of channels 140_1 to 140_i, to the CXL controller 110, and the decrypted data may be provided from the CXL controller 110 to the host 10.

The volatile memory 120 may include the plurality of DRAMs 121_11 to 121_ij. m may include an integer of 2 or greater. The volatile memory 120 may be configured to communicate with the CXL controller 110 through the plurality of channels 140_1 to 140_i and operate in an interleaving method through the plurality of channels 140_1 to 140_i. Some of the plurality of DRAMs 121_11 to 121_ij may be configured to communicate with the CXL controller 110 through one channel. For example, the DRAMs 121_11 to 121_1j may communicate with the CXL controller 110 through the first channel 140_1. The DRAMs 121_21 to 121_2j may communicate with the CXL controller 110 through the second channel 140_2. Similarly, the DRAMs 121_i1 to 121_ij may communicate with the CXL controller 110 through the ith channel 140_i.

Although not shown, the CXL device 100 may further include a nonvolatile memory including a NOT-AND (NAND) flash and the like.

According to the implementations described above, a target device (e.g., the CXL device 100) allocates and manages a key to be used for memory encryption and/or decryption, based on a device physical address thereof, and thus may support memory encryption and/or decryption for all of storage regions of the volatile memory 120 without an overlapping or empty portion. This may improve data encryption and/or decryption.

In addition, according to the implementations described above, as the target device allocates and manages keys without being dependent on the host devices, in terms of the host device, general data read operations or data write operations may be performed, therefore, even in the memory-pooling environment and the memory sharing environment (e.g., a shared memory such as LD-FAM and G-FAM), the memory encryption may be supported, and the performance of the system may be improved.

In addition, according to the implementations described above, in FIG. 1, by implementing the CXL sub-system controller 112 and the memory sub-system controller 113, latency may be reduced compared with an implementation in which the controllers (i.e., the CXL sub-system controller 112 and the memory sub-system controller 113) are implemented as a single component. The CXL sub-system controller 112 may allocate a key while the memory sub-system controller 112 encrypts/decrypts data thereby reducing latency. For example, while the memory sub-system controller 113 encrypts/decrypts current data, the CXL sub-system controller 112 may search for a key index to be used for encrypting/decrypting next data. Next data may be data from the volatile memory 120 and/or requested for a read/write by the host device 10. The controller 112, 113 may function contemporaneously.

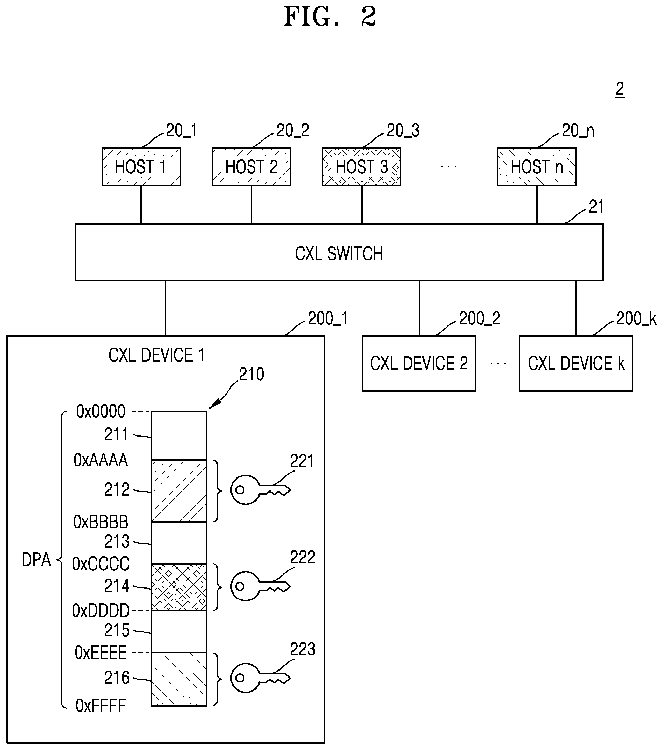

FIG. 2 is a block diagram illustrating an example of a CXL fabric system 2.

Referring to FIG. 2, the CXL fabric system 2 may share information between devices, provide a memory sharing function, and provide a memory-pool function, through networking that is fabric of the CXL standard of version 3.0 and above. The CXL fabric system 2 may include a plurality of hosts 20_1 to 20_n, a CXL switch 21, and a plurality of CXL devices 200_1 to 200_k (i.e., a first CXL device 200_1 to a kth CXL device 200_k). n and k may each include an integer of 2 or greater.

Each of the plurality of hosts 20_1 to 20_n may be configured to perform the operation of the host 10 shown in FIG. 1.

The CXL switch 21 may be configured to mediate communication between the plurality of hosts 20_1 to 20_n and the plurality of CXL devices 200_1 to 200_k. For example, the CXL switch 21 may be configured to deliver information, e.g., a request, data, a response, or signal delivered from each host and each CXL device, to each host and each CXL device. The CXL switch 21 may be used for implementing a group memory that facilitates one-to-many and many-to-one switching in a state where the group of devices is divided into a plurality of logical devices each having a logic device (LD)-identifier (ID). For example, the CXL switch 21 may (i) connect a plurality of root ports to an end point, (ii) connect one root port to a plurality of end points, or (iii) connect a plurality of root ports to a plurality of end points. The CXL switch 21 may include a plurality of input/output ports connected to the fabric. Each of the plurality of input/output ports of the CXL switch 21 may be configured to support a CXL interface and implement the CXL protocol. While a CXL switch 21 is described and illustrated in FIG. 2, one of ordinary skill in the art will appreciate that such a CXL switch 21 may be omitted.

Each of the plurality of CXL devices 200_1 to 200_k may be configured to perform the operation of the CXL device 100 shown in FIG. 1 and include the components included in the CXL device 100 shown in FIG. 1. In some implementations, the plurality of CXL devices 200_1 to 200_k may be configured to provide memory sharing and memory pooling.

The plurality of CXL devices 200_1 to 200_k may each include a storage region. For example, the first CXL device 200_1 may include a storage region 210. Sub-regions of the storage region 210 may be divided into certain ranges by using values 0x0000 to 0xFFFF of a device physical address DPA. References for dividing the ranges may be variously set, for example, a minimum storage region unit assigned to each host, a memory pooling unit, a memory sharing unit, a preset unit, and the like. For example, sizes of address ranges 211 to 216 may be identical to or different from one another, and may be adjusted for supporting dynamic capacity. As the host physical address is an address independently used by each host, values of the host physical addresses may overlap between the hosts. However, as the device physical address DPA is an inherent address of each CXL device, values of the device physical addresses DPA for one CXL device may not overlap between the hosts.

In some implementations, at least some of the plurality of hosts 20_1 to 20_n may share storage regions of the plurality of CXL devices 200_1 to 200_k according to memory sharing between the plurality of CXL devices 200_1 to 200_k. For example, the first host 20_1 and the second host 20_2 may be assigned with the address range 212 in the storage region 210 of the first CXL device 200_1 and share the address range 212 with each other. In the storage region 210 of the first CXL device 200_1, the address range 212 may correspond to values 0xAAAA to OxBBBB of the device physical address DPA. In this case, "0xAAAA" may include an initial value of the device physical address DPA corresponding to the address range 212, and "OxBBBB" may include a final value of the device physical address DPA corresponding to the address range 212. The first CXL device 200_1 may be configured to assign the address range 212 to the first host 20_1 and the second host 20_2 and set at least one key 221 corresponding to the address range 212. The at least one key 221 may be used for encrypting data to be stored in the address range 212 or decrypting the encrypted data that is stored in the address range 212.

In some implementations, at least some of the plurality of hosts 20_1 to 20_n may be assigned with the storage regions of the plurality of CXL devices 200_1 to 200_k according to memory pooling of the plurality of CXL devices 200_1 to 200_k. For example, the third host 20_3 may be assigned with the address range 214 in the storage region 210 of the first CXL device 200_1. In the storage region 210 of the first CXL device 200_1, the address range 214 may correspond to values 0xCCCC to OxDDDD of the device physical address DPA. In this case, "0xCCCC" may include an initial value of the device physical address DPA corresponding to the address range 214, and "0xDDDD" may include a final value of the device physical address DPA corresponding to the address range 214. For example, the nth host 20_n may be assigned with the address range 216 in the storage region 210 of the first CXL device 200_1. The address range 216 may correspond to values 0xEEEE to 0xFFFF of the device physical address DPA. The first CXL device 200_1 may be configured to assign the address ranges 214 and 216 to the third host 20_3 and the nth host 20_n, respectively, and set keys 222 and 223, respectively, corresponding to the address ranges 214 and 216.

For example, in the storage region 210 of the first CXL device 200_1, the address ranges 211, 213, and 215 may include unallocated regions, that is, allocation-released regions. Keys used for memory encryption may have not been set for the address ranges 211, 213, and 215 that have been allocation-released. When at least one of the plurality of hosts 20_1 to 20_n designates an allocation size and sends an allocation request, the first CXL device 200_1 may allocate some regions (e.g., specific address regions) of the address ranges 211, 213, and 215 that have been allocation-released, according to the allocation size, and may set at least one key corresponding to the some regions that have been allocated.

Some of the CXL devices 200_2 to 200_k may also allocate storage regions in response to the allocation request from the host, and may set at least one key corresponding to the allocated storage region. Accordingly, a key may be allocated to each of the address ranges of the CXL device currently used by each of the plurality of hosts 20_1 to 20_n, and the keys are not allocated to unallocated address ranges.

In some implementations, a certain CXL device may be configured to store the encrypted data in a storage region allocated to a certain host device, in response to the write request received from the certain host device. In an example with reference to FIGS. 1 and 2, a CXL controller of the first CXL device 200_1 may receive a first write request from the first host 20_1. The CXL controller of the first CXL device 200_1 may be configured to provide a command address signal and first encrypted data to a volatile memory of the first CXL device 200_1 through a channel selected from among the plurality of channels. The first write request may include first host data, first data, and a first host physical address, and the command address signal may include the write command and a first device physical address. Descriptions about data will be given below.

In some implementations, a certain CXL device may read data (e.g., encrypted data) stored in the storage region allocated to a certain host device, in response to the read request received from the certain host device. In the example with reference to FIGS. 1 and 2, the CXL controller of the first CXL device 200_1 may receive a first read request from the first host 20_1. The CXL controller of the first CXL device 200_1 may be configured to provide the command address signal to the volatile memory of the first CXL device 200_1 through the channel selected from among the plurality of channels. The first read request may include the first host data and the first host physical address, and the command address signal may include the read command and the first device physical address. Descriptions about data will be given below.

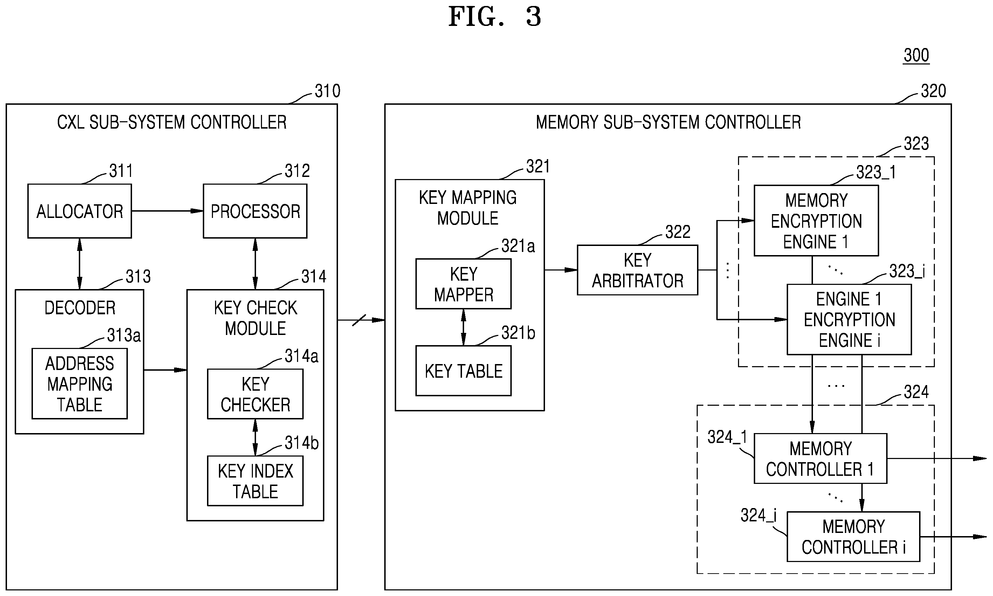

FIG. 3 is a block diagram of an example of a CXL sub-system controller 310 and a memory sub-system controller 320.

Referring to FIG. 3, the CXL sub-system controller 310 and the memory sub-system controller 320 included in the CXL controller 300 may be physical and/or logical sub-systems configured to process CXL packets.

The CXL sub-system controller 310 may be configured to obtain a key index, based on at least one key index table, host data, and a certain device physical address DPA mapped to a host physical address.

In some implementations, the CXL sub-system controller 310 may include an allocator 311, a processor 312, a decoder 313, and a key check module 314.

The allocator 311 may receive an unallocated (i.e., allocation-released) device physical address DPA from the decoder 313, in response to an allocation request of a host (e.g., the host 10 in FIG. 1 and/or an arbitrary host among the plurality of hosts 20_1 to 20_n in FIG. 2). In some implementations, the allocation request may include an initial value of the host physical address and the size of the host physical address. In some implementations, the allocation request may include the initial value and a final value of the host physical address. The allocator 311 may map the host physical address, which is currently received, to the device physical address DPA that has been received, and may update an address mapping table 313a of the decoder 313 by storing a result of the mapping in the address mapping table 313a. The allocator 311 may provide a device physical address DPA, which is newly allocated, to the processor 312.

The processor 312 may generate at least one new key based on the device physical address DPA received from the allocator 311. The number of keys to be generated may be determined according to the type of encryption algorithm. For example, when an encryption algorithm is Advanced Encryption Standard (AES)-XTS, the processor 312 may generate a data encryption key (Ekey) and a tweak key (Tkey) defined by the AES encryption algorithm standard. For example, when an encryption algorithm is AES-Galois/Counter Mode (GCM), the processor 312 may generate one key. However, the present disclosure is not limited to the aforementioned implementations.

The processor 312 may, after generating at least one key, receive a newly allocated key index from the key check module 314, by communicating with the key check module 314. The processor 312 may store the received key index and the generated at least one key in the key mapping module 321.

In some implementations, to generate an AES key, the processor 312 may include hardware/firmware modules such as True Random Number Generator (TRNG), Pseudo Random Number Generator (PRNG), and the like.

The decoder 313 may convert and/or decode the host physical address into the device physical address DPA. In some implementations, the decoder 313 may be implemented as a Host-managed Device Memory (HDM) decoder or a Global (G)-Fabric-Attached-Memory (FAM) device (GFD) decoder defined in the CXL standard. The decoder 313 may provide the device physical address DPA to the memory sub-system controller 320 and/or the key check module 314. In some implementations, the decoder 313 may include the address mapping table 313a. The address mapping table 313a may include a table indicating a mapping relationship between the host physical address and the device physical address DPA. The address mapping table 313a may include a plurality of entries (or may be referred to as a plurality of slots), a value of the host physical address and a value of the device physical address DPA may be stored in each of some of the plurality of entries, and some of the plurality of entries may be empty.

The key check module 314 may be configured to provide a key index corresponding to input data, from among key indices stored in the key check module 314, to the processor 312 and/or the key mapping module 321. For example, the key check module 314 may be configured to search for a corresponding key index from among at least one key index table, based on the input data and a search algorithm.

In some implementations, the input data input to the key check module 314 may include the host data. The host data may include information regarding a host that is to access the CXL device (e.g., the CXL device 100 in FIG. 1 and/or the CXL device selected from among the plurality of CXL devices 200_1 to 200_k in FIG. 2). For example, the host data may include a value of a host number. The host number may include a parameter for identifying a host that is to currently access the CXL device. By using the host data, the key check module 314 may confirm the type of memory encryption supported and used by each host.

In some implementations, the input data input to the key check module 314 may further include various types of data for accessing the CXL device and identifying memory encryption supported by the host. In an implementation, the key check module 314 may receive the initial value and the final value of the device physical address DPA as the input data. In an implementation, the key check module 314 may receive an initial value and the final value of the host physical address as the input data. In an implementation, the key check module 314 may receive the CKID data as the input data. The CKID data may include a CKID value and a value indicating the type of CKID.

In some implementations, the key check module 314 may include a key checker 314a and/or a key index table 314b.

The key checker 314a may search for a corresponding key index from the key index table 314b by using various input data. Here, the corresponding key index may include a parameter for indexing at least one key used for memory encryption used by the host that is to be currently accessed and/or is requesting access. In some implementations, the method of searching for a key index may be variously implemented, e.g., linear search, binary search, and tree. When the host sends an allocation request, the key checker 314a may store the key index in an empty entry (or a slot) in the key index table 314b by using various input data received from the processor 312, to thereby update the key index table 314b.

The key index table 314b may be implemented as Static RAM (SRAM) and the like. The key index table 314b may include a plurality of entries, and in an entry, a value of a key index and values of attributes corresponding to a key index may be stored. There may be an empty entry among the plurality of entries of the key index table 314b.

The CXL sub-system controller 310 may be configured to provide a certain device physical address and a key index that has been searched for to the memory sub-system controller 320. In some implementations, two or more signal lines for transmitting and receiving data between the CXL sub-system controller 310 and the memory sub-system controller 320 may be implemented. For example, two signal lines may be implemented, and here, a signal line may be a line through which the certain device physical address and the key index are sequentially delivered, and the other signal line may be a line through which the data is delivered. When two signal lines are implemented, the manufacturing cost may be reduced, and the signal lines may be easily designed and implemented. For example, three signal lines may be implemented, a signal line may include a line through which a certain device physical address is delivered, another signal line may include a line through which a key index is delivered, and the other signal line may include a line through which data is delivered. When three signal lines are implemented, security may be further improved.

The memory sub-system controller 320 may be configured to obtain the at least one key, based on a key table 321b for at least one key and the key index that has been searched for. The memory sub-system controller 320 may be configured to generate encrypted data, based on data, the certain device physical address DPA, the at least one key, and the encryption algorithm. In addition, the memory sub-system controller 320 may be configured to decrypt the first encrypted data, based on the first encrypted data, the first device physical address, the at least one first key, and the encryption algorithm.

In some implementations, the memory sub-system controller 320 may include the key mapping module 321, a key arbitrator 322, a plurality of memory encryption engines 323, and a plurality of memory controllers 324.

The key mapping module 321 may search for the at least one key from the key table 321b, based on the key index and the search algorithm.

The key mapping module 321 may manage a key for each key index stored therein. For example, the key mapping module 321 may store at least one key generated by the processor 312, load key(s) corresponding to the key index from among the keys stored in the key mapping module 321, and delete a corresponding key in response to allocation-release of the device physical address DPA. From among the keys, the key mapping module 321 may provide the key(s) corresponding to the received key index to a memory encryption engine, for example via the key arbitrator 323 as will be described.

In some implementations, the key mapping module 321 may include a key mapper 321a and a key table 321b. The key mapper 321a may search for corresponding key(s) from the key table 321b by using the received key index. In some implementations, a method of searching for at least one corresponding key may be variously implemented, for example, linear search, binary search, and the like. The key mapper 321a may update the key table 321b by storing the received at least one key in the key table 321b. The key table 321b may be implemented as SRAM and the like. The key table 321b may include a plurality of entries, and in an entry, a value of a key index and values of key(s) corresponding to the key index may be stored. In some implementations, only the key checker 314a may access the key index table 314b.

The key arbitrator 322 may provide the at least one key to the memory encryption engine selected according to the received device physical address DPA among the plurality of memory encryption engines 323.

Each of the plurality of memory encryption engines 323 may be implemented as an AES engine. In some implementations, a memory encryption engine selected from the plurality of memory encryption engines may set the at least one key received from the key arbitrator 322, and may perform encryption/decryption operations by using encryption algorithms, e.g., AES-XTS and AES-GCM, and keys that have been set. For example, when at least one key is delivered to a first memory encryption engine 323_1, the first memory encryption engine 323_1 may generate encrypted data, based on data, the at least one key, and the encryption algorithm, and provide encrypted data to a first memory controller 324_1. For example, when at least one key is delivered to the first memory encryption engine 323_1, the first memory encryption engine 323_1 may decrypt the encrypted data, based on the encrypted data, the at least one key, and the encryption algorithm, and output the decrypted data. However, the present disclosure is not limited to the aforementioned implementations.

The plurality of memory controllers 324 may respectively communicate with the DRAMs shown in FIG. 1, which have been connected to corresponding channels. Generally, the plurality of memory controllers 324 communicate with the volatile memory 120 shown in FIG. 1. For example, a corresponding controller (a selected memory controller) among the plurality of memory controllers 324 may receive encrypted data from a corresponding memory encryption engine, and may output the encrypted data and the command address signal (e.g., the command address signal includes the write command). For example, a corresponding controller (or a selected memory controller) among the plurality of memory controllers 324 may output the command address signal (for example, the command address signal includes the read command), and may provide the received data (or the encrypted data) to a corresponding memory encryption engine.

In some implementations, the numbers of memory encryption engines 323 and memory controllers 324 may each be identical to the number of plurality of channels 140_1 to 140_i shown in FIG. 1.

According to implementations, latency regarding reading/writing the DRAM (or more generally the volatile memory, e.g., memory 120 shown in FIG. 1) may be reduced due to the encryption/decryption operations.

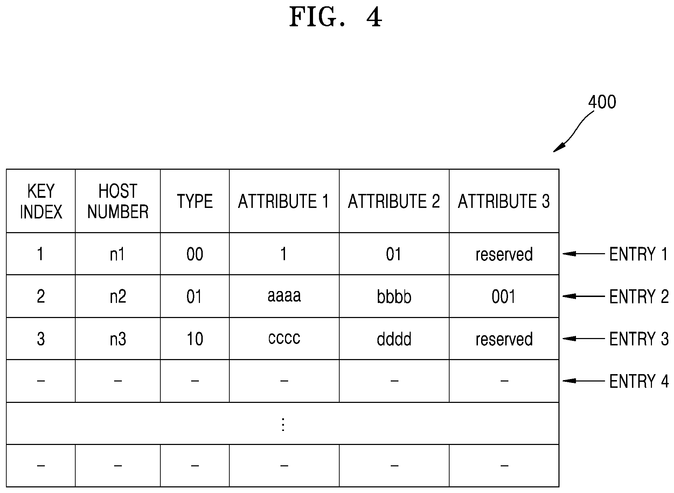

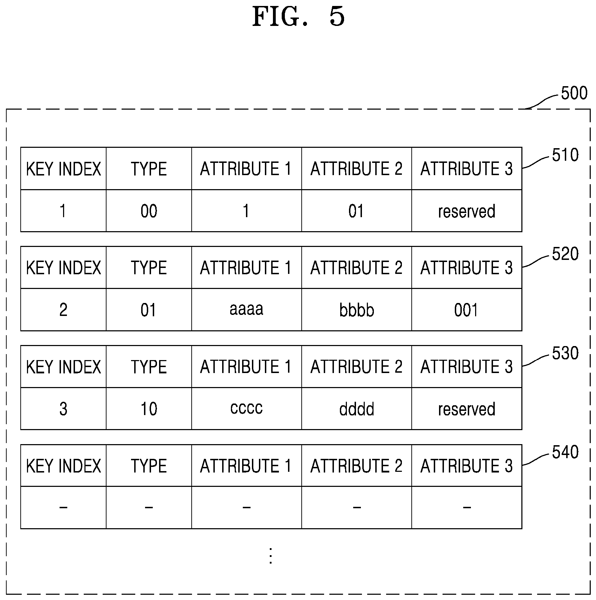

FIG. 4 is a diagram illustrating an example of a single key index table 400, and FIG. 5 is a diagram illustrating an example of a plurality of key index tables 500.

In some implementations, a key index table may include values of a plurality of key indices, values of types of memory encryption, and values of attributes of the host device.

Referring to FIGS. 3 and 4, the key index table 314b of the key check module 314 may be implemented as a single key index table 400.

The single key index table 400 may store the values of the plurality of key indices, values of host numbers, the values of types of memory encryption, and the values of attributes for each of the plurality of host devices.

Every time the address range of the device physical address DPA is allocated, a value of a new key index may be stored in the single key index table 400. In this case, a value of a key index newly stored may increase one by one.

The value of the host number may correspond to a value included in the received host data.

The type of memory encryption may indicate device physical address-based memory encryption, target-based memory encryption (e.g., CKID-based memory encryption and range-based memory encryption), or the like. For example, when a value of the type of memory encryption is "00", the value may indicate CKID-based memory encryption. For example, when a value of the type of memory encryption is "01", the value may indicate range-based memory encryption. For example, when a value of the type of memory encryption is "10", the value may indicate device physical address-based memory encryption. However, the present disclosure is not limited to the aforementioned implementations.

In some implementations, the number of attributes may vary according to the type of memory encryption. Attributes for CKID-based memory encryption indicates information regarding CKID, the number of attributes is two; attributes for range-based memory encryption indicates the host physical address, the number of attributes is two or three; and attributes for device physical address-based memory encryption indicates the device physical address DPA, and the number of attributes may be two. However, the present disclosure is not limited to the aforementioned implementations.

A value of an index, a value of a host number, a value of the type of memory encryption, and a value of at least an attribute may be stored in each of the entries of the single key index table 400. For example, values may be stored in a first entry ENTRY1 to a third entry ENTRY3, and a fourth entry ENTRY4 and entries thereafter may be empty, but the present disclosure is not limited thereto.

For example, in the first entry ENTRY1, a value of a key index may be "1", a value of a host number may be "n1", a value of the type of memory encryption may be "00", a value of a first attribute ATTRIBUTE1, which indicates a CKID value, may be "1", a value of a second attribute ATTRIBUTE2, which indicates a value of CKID type, may be "01".

For example, in the second entry ENTRY2, a value of a key index may be "2", a value of a host number may be "n2", a value of the type of memory encryption may be "01", a value of a first attribute ATTRIBUTE1, which indicates the initial value of the host physical address, may be "aaaa", a value of a second attribute ATTRIBUTE2, which indicates the final value of the host physical address, may be "bbbb", and a value of a third attribute ATTRIBUTE3, which indicates a value of an identifier of a host that provides the host physical address, may be "001". In another implementation, among attributes indicating the host physical device, the third attribute ATTRIBUTE3 may be reserved, for example in the case of the first and second entries ENTRY1 and ENTRY2, respectively.

For example, in the third entry ENTRY3, a value of a key index may be "3", a value of a host number may be "n3", a value of the type of memory encryption may be "10", a value of a first attribute ATTRIBUTE1, which indicates the initial value of the device physical address DPA, may be "cccc", and a value of a second attribute ATTRIBUTE2, which indicates a final value of the device physical address DPA, may be "dddd".

According to the implementation shown in FIG. 4, the present disclosure may be easily designed and implemented.

Referring to FIGS. 3 and 5, the key index table 314b of the key check module 314 may include a plurality of key index tables 500 respectively corresponding to the plurality of host devices (e.g., the plurality of hosts 20_1 to 20_n in FIG. 2).

Each of the plurality of key index tables 500 may store a value of a corresponding key index, a value of the corresponding type of memory encryption, and values of attributes for a corresponding host device. For example, a first key index table 510 to a third key index table 530 indicates an example of tables to which key indices are allocated, and a fourth key index table 540 indicates an example of an empty table. Example values included in the first key index table 510 to the third key index table 530 are as described above with reference to FIG. 4, and therefore, descriptions thereof will not be given.

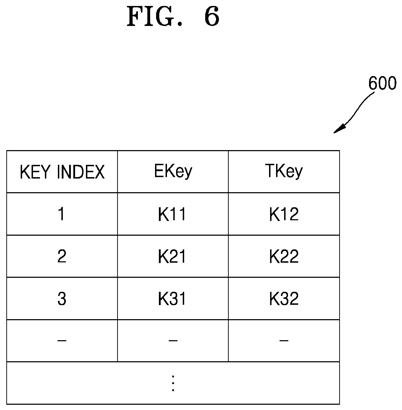

According to the implementation illustrated in FIG. 6, a rate of searching tables may be improved.

FIG. 6 is a diagram illustrating an example of a key table 600.

Referring to FIG. 6, the key table 600 may include, for each of the plurality of key indices, a value of an Ekey defined in the AES encryption algorithm standard (e.g. K11, K21, or K32) and a value of a Tkey (e.g., K12, K22, or K32). The Ekey and the Tkey may be keys used in AES-XTS.

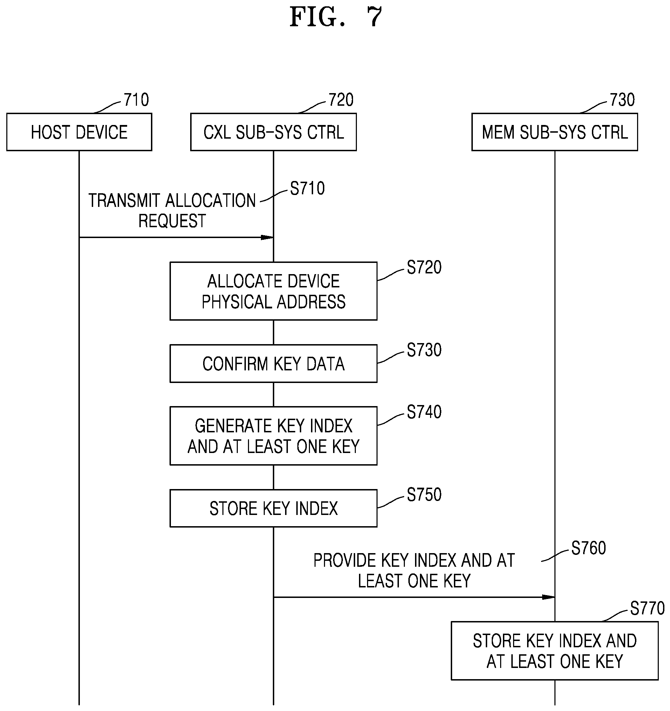

FIG. 7 is a ladder diagram for describing an example of a method of setting a new key.

Referring to FIG. 7, in S710, the host device 710 may transmit an allocation request, and the CXL sub-system controller 720 may receive the allocation request.

In an implementation, when the host device 710 is to use device physical address-based memory encryption, the allocation request may include the host physical address and the host data.

In an implementation, when the host device 710 is to use target-based memory encryption, the allocation request may include the host physical address, the host data, key data, and attribute data. The key data may include a value regarding a key to be used by the host device 710. For example, the key data may include a value indicating a key itself to be used by the host device 710. For example, the key data may include a value of key entropy to be used by the CXL sub-system controller 720 to generate the key. The attribute data may include values of attributes of the host device 710. For example, the attributes may include CKID and the type of CKID. For example, the attributes may include the range of host physical addresses.

In an implementation, the CXL sub-system controller 720 may be configured to receive the first host data and the first host physical address from a first host device.

In another implementation, when the keys for the first host device are allocated by the CXL sub-system controller 720, the CXL sub-system controller 720 may be configured to receive, from the second host device, second host data, second key data about a key to be used by the second host, and second attribute data about attributes of the second host device.

In another implementation, when keys for the first host device to third host device are allocated by the CXL sub-system controller 720, the CXL sub-system controller 720 may be configured to receive fourth host data and a fourth host physical address from a fourth host device.

In S720, the CXL sub-system controller 720 may allocate the device physical address DPA mapped to the host physical address.

The CXL sub-system controller 720 according to an implementation may be configured to allocate the first device physical address corresponding to the first host physical address.

The CXL sub-system controller 720 according to another implementation may be configured to allocate a fourth device physical address corresponding to the fourth host physical address.

In S730, the CXL sub-system controller 720 may confirm the key data. In some implementations, the key data may be not provided to the CXL device 100, and therefore, S730 may be omitted.

In S740, the CXL sub-system controller 720 may generate the key index and at least one key. The number of key indices to be generated is one, and the number of keys to be generated may be two in AES-XTS or one in AES-GCM.

The CXL sub-system controller 720 according to an implementation may be configured to generate at least one first key and a first key index corresponding to the first device physical address.

The CXL sub-system controller 720 according to another implementation may be configured to generate at least one second key and a second key index corresponding to the at least one second key, based on the second key data.

The CXL sub-system controller 720 according to another implementation may be configured to generate at least one fourth key corresponding to the fourth device physical address.

In S750, the CXL sub-system controller 720 may store the key index in at least one key index table.

The CXL sub-system controller 720 according to an implementation may be configured to store the first key index, the first host data, and the first device physical address, which correspond to the at least one first key, in the at least one key index table.

The CXL sub-system controller 720 according to another implementation may be configured to store the second key index, the second host data, and the second attribute data in the key index table.

The CXL sub-system controller 720 according to another implementation may be configured to store the fourth key index, the fourth host data, and the fourth device physical address, which correspond to the at least one fourth key, in the key index table.

In S760, the CXL sub-system controller 720 may provide the key index and the at least one key to the memory sub-system controller 730.

In S770, the memory sub-system controller 730 may store the key index and the at least one key in the key table.

The memory sub-system controller 730 according to an implementation may be configured to store the first key index and the at least one first key in the key table for the at least one key.

The memory sub-system controller 730 according to another implementation may be configured to store the second key index and the at least one second key in the key table.

The memory sub-system controller 730 according to another implementation may be configured to store the fourth key index and the at least one fourth key in the key table.

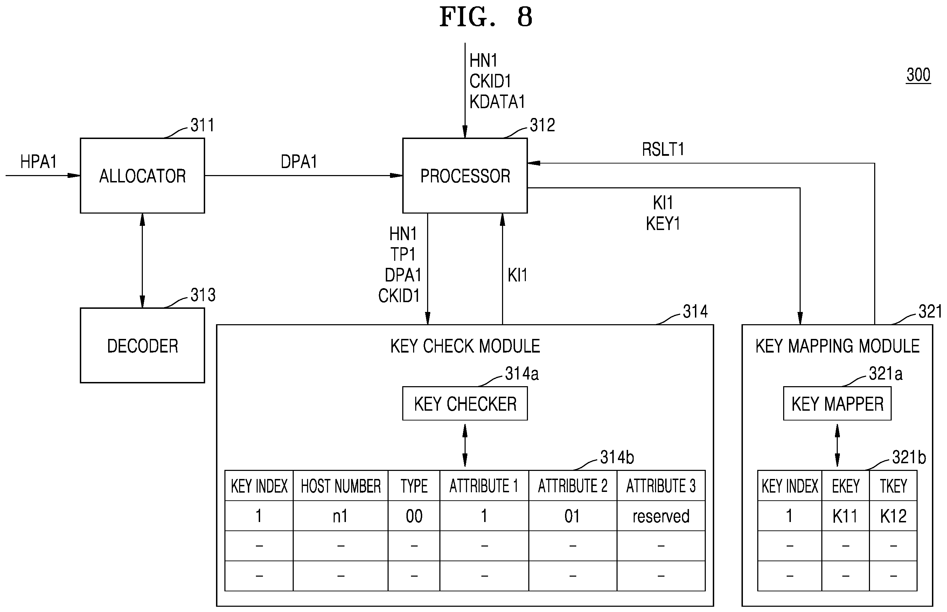

FIG. 8 is a diagram for describing an example of setting a key used for CKID-based memory encryption.

Referring to FIG. 8, the first host device may provide a first host physical address hPA1, fist host data HN1, first CKID data CKID1, and first key data KDATA1 to the CXL controller 300 by using TSP. For example, the first host physical address HPA1 may include a range of an address including an initial value and a final value of the address. For example, the first host physical address HPA1 may include the initial value of the address and a size of the host physical device. The first host data HN1 may include a value of a host number for identifying the first host device. The first CKID data CKID1 may include values of CKID to be used by the first host device and the type of CKID. The first key data KDATA1 may include a value of the key to be used by the first host device. For example, the first key data KDATA1 may include the value of the key to be used by the first host device or a value of a key entropy.

In some implementations, the first host device may provide the first CKID data CKID1 and the first key data KDATA1 to the CXL controller 300, in response to Security Protocol and Data Model (SPDM) commands defined in the CXL standard.

The allocator 311 may communicate with the decoder 313, to thereby allocate a first device physical address DPA1 to be mapped to the first host physical address HPA1 and provide the first device physical address DPA1 to the processor 312.

The processor 312 may receive the first device physical address DPA1, the first host data HN1, the first CKID data CKID1, and the first key data KDATA1, and may generate at least one first key KEY1 to be used by the first host device. The at least one first key KEY1 may include a first Ekey and a first Tkey. It is assumed that a value of the first Ekey is "K11" and a value of the first Tkey is "K12".

The processor 312, after checking a value of the first host data HN1, may provide the first CKID data CKID1, the first device physical address DPA1, the first host data HN1, and first type data TP1 to the key check module 314. A value of the first type data TP1, e.g., is "00", and it is assumed that the value indicates that CKID-based memory encryption is used in the first host device.

The key checker 314a of the key check module 314 may allocate the at least one first key KEY1 and a first key index KI1 corresponding to the at least one first key KEY1. The key checker 314a of key check module 314 may store a value of the first key index KI1, a value of the first host data HN1, values of the first CKID data CKID1, and the value of the first type data TP1 in the key index table 314b of the key check module 314. The key index table 314b may return a result of the storing to the key checker 314a. When the result that has been returned indicates success, the key checker 314a may provide the first key index KI1 to the processor 312.

The processor 312 may provide the at least one first key KEY1 and the first key index KI1 to the key mapping module 321.

The key mapper 321a of the key mapping module 321 may confirm whether there are errors in the at least one first key KEY1 and then store the first key index KI1 in the key table 321b of the key mapping module 321. The key table 321b may return a result of the storing to the key mapper 321a, and a returned result RSTL1 may be delivered to the processor 312.

FIG. 9 is a diagram for describing an example of setting a key used for range-based memory encryption;

Referring to FIG. 9, the second host device may provide a second host physical address HPA2, second host data HN2, and second key data KDATA2 to the CXL controller 300 by using TSP. In some implementations, the second host device may provide the SPDM commands defined in CXL to the CXL controller 300.

The allocator 311 may provide a second device physical address DPA2, which is mapped to the second host physical address HPA2, to the processor 312.

The processor 312 may receive the second device physical address DPA2, the second host data HN2, and the second key data KDATA2, and may generate at least one second key KEY2 to be used by the second host device. It is assumed that a value of a second Ekey of the at least one second key KEY2 is "K21", and a value of a second Tkey of the at least one second key KEY2 is "K22".

The processor 312, after checking a value of the second host data HN2, may provide the second host data HN2, the second device physical address DPA2, and the second type data TP2 to the key check module 314. A value of the second type data TP2, e.g., is "01", and it is assumed that the value indicates that range-based memory encryption is used in the second host device.

Like in the description given above with reference to FIG. 8, the key check module 314 may allocate a second key index KI2 corresponding to the at least one second key KEY2, and may store a value of the second key index KI2, a value of the second host data HN2, values of the second host physical address HPA2, and the value of the second type data TP2. The value of the second key index KI2, which has been returned, may be provided to the processor 312.

Like in the description given above with reference to FIG. 8, the processor 312 may provide the at least one second key KEY2 and the second key index KI2 to the key mapping module 321, and the key mapping module 321 may store the value of the second key index KI2, a value of the second Ekey, and a value of the second Tkey. A returned result RSLT2 may be delivered to the processor 312.

FIG. 10 is a diagram for describing an example of setting a key used for device physical address-based memory encryption.

Referring to FIG. 10, the allocator 311 may convert a third host physical address HPA3, which has been received from the third host device, into a third device physical address DPA3. The processor 312 may receive the third device physical address DPA3 and third host data HN3, generate values (e.g., "K31" and "K32" in FIG. 10) of at least one third key KEY3 to be used by the third host device, confirm a value of the third host data HN3, the third device physical address DPA3, and third type data TP3 to the key check module 314. A value of the third type data TP3, e.g., is "10", and it is assumed that the value indicates that device physical address-based memory encryption is used in the third host device.

Like in the descriptions given above with reference to FIGS. 8 and 9, the key check module 340 may store a value of a third key index KI3 corresponding to the at least one third key KEY3, a value of the third host data HN3, values of the third device physical address DPA3, and the value of the third type data TP3, and a value of the third key index KI3, which has been returned, may be provided to the processor 312. In addition, the key mapping module 321 may store the value of the third key index KI3 and values of the at least one third key KEY3, which are provided from the processor 312, and a returned result RSLT3 may be delivered to the processor 312.

FIG. 11 is a ladder diagram for describing an example of a method of storing encrypted data.

Referring to FIG. 11, in S1110 and S1120, the host device 710 may transmit a write request and data, and the CXL sub-system controller 720 may receive the write request and deliver the data to the memory sub-system controller 730. In some implementations, the data of the host device 710 may also be provided to the memory sub-system controller 730.

In some implementations, the write request may include a host physical address, host data, and data. In an implementation, the write request may further include CKID data.

In an implementation, the CXL sub-system controller 720 may be configured to receive the first host data and the first host physical address from a first host device.

In some implementations, the CXL sub-system controller 720 may be configured to receive the CKID data, the second host data, and the second host physical address from the second host device.

In some implementations, the CXL sub-system controller 720 may be configured to receive the third host data and the third host physical address from the third host device, by using the TSP defined in the CXL standard.

In S1130, the CXL sub-system controller 720 may convert a physical address. For example, a decoder of the CXL sub-system controller 720 may decode the host physical address into the device physical address DPA.

In S1140, the CXL sub-system controller 720 may obtain a key index corresponding to the host device 710.

The CXL sub-system controller 720 according to an implementation may be configured to convert the first host physical address into the first device physical address for the volatile memory 120. In addition, the CXL sub-system controller 720 may be configured obtain the first key index set for the first host device, based on the at least one key index table, the first host data, and the first device physical address.

The CXL sub-system controller 720 according to another implementation may be configured to obtain the second key index set for the second host device, based on the at least one key index table, the CKID data, and the second host data.

In another implementation, the CXL sub-system controller 720 may be configured to obtain a third key index set for the third host device, based on the at least one key index table, the third host physical address, and the third host data.

In S1150, the CXL sub-system controller 720 may provide the key index and the device physical address to the memory sub-system controller 730.

In S1160, the memory sub-system controller 730 may obtain at least one key corresponding to the host device 710.

The memory sub-system controller 730 according to an implementation may be configured to obtain at least one first key set for the first host device, based on a key table for at least one key set for each of a plurality of key indices and the first key index.

The memory sub-system controller 730 according to another implementation may be configured to obtain at least one second key set for the second host device, based on the second key index and the key table.

The memory sub-system controller 730 according to another implementation may be configured to obtain at least one third key set for the third host device, based on the third key index and the key table.

In S1170, the memory sub-system controller 730 may select a memory encryption engine and a memory controller. For example, the key arbitrator of the memory sub-system controller 730 may select the memory select engine and the memory controller from among a plurality of memory encryption engines and a plurality of memory controllers, based on the device physical address DPA.

In S1180, the memory sub-system controller 730 may perform an encryption operation by using at least one key and the encryption algorithm. For example, the encryption operation may include an operation of encrypting the data provided from the host device 710.

The memory sub-system controller 730 according to an implementation may be configured to perform the encryption operation, based on the at least one first key and the encryption algorithm.

The memory sub-system controller 730 according to another implementation may be configured to execute CKID-based memory encryption defined in the CXL standard, based on the at least one second key and the encryption algorithm.

The memory sub-system controller 730 according to another implementation may be configured to perform range-based memory encryption defined in the CXL standard, based on the at least one third key and the encryption algorithm.

In S1190, the memory sub-system controller 730 may provide the command address signal and encrypted data to the volatile memory 740.

Hereinafter, various implementations regarding FIG. 11 will be described below with reference to FIGS. 12 to 14.

FIG. 12 is a diagram for describing an example in which data is encrypted by using CKID-based memory encryption.

Referring to FIG. 12, the first host device may output the write request according to the type of memory encryption to be used. In an implementation, when the memory encryption used by the first host device includes the CKID-based memory encryption, the write request may include the first host physical address HPA1, the first host data HN1, and the first CKID data CKID1. In an implementation, the first host physical address HPA1 may also be delivered to the key check module 314 through the host interface 111.

The decoder 313 may decode (for example, may be referred to as converting or mapping) the first host physical address HPA1 into the first device physical address DPA1.

The key check module 314 may receive the first device physical address DPA1, the first host data HN1, and the first CKID data CKID1. The key checker 314a of the key check module 314, after checking the value of the first host data HN1 (e.g., the value of the host number), may search for a value of the first key index KI1 (e.g., "1") stored in the first entry of the key index table 314b of the key check module 314, by using the first host data HN1 and the first CKID data CKID1. After the key index table 314b returns the first key index KI1 to the key checker 314a, the key checker 314a may provide the first key index KI1 to the key mapping module 321.

The key mapper 321a of the key mapping module 321 may search values (e.g., "K11" and "K12") of the first keys (i.e., the first Ekey EKEY1 and the first Tkey TKEY1) stored in the first entry of the key table 321b of the key mapping module 321, by using the value (e.g., "1") of the first key index KI1. After the key table 321b returns the first Ekey EKEY1 and the first TKey TKEY1 to the key mapper 321a, the key mapper 321a may provide the first keys (i.e., the first Ekey EKEY1 and the first TKey TKEY1) to the key arbitrator 322.

The key arbitrator 322 may receive the first Ekey EKEY1, the first TKey TKEY1, and the first device physical address DPA1. The key arbitrator 322 may select a memory encryption engine corresponding to the first device physical address DPA1 from among the plurality of memory encryption engines 323 and provide the first Ekey EKEY1 and the first Tkey TKEY1 to the selected memory encryption engine.

The memory encryption engine (e.g., the first memory encryption engine 323_1) selected from among the plurality of memory encryption engines 323 may receive the first Ekey EKEY1, the first Tkey TKEY1, and the first data DATA1. The selected encryption engine may set the first Ekey EKEY1 and the first Tkey TKEY1 by queueing the received first Ekey EKEY1 and the first Tkey TKEY1 in a queue. In addition, the selected encryption engine may encrypt the first data DATA1 by using the first Ekey EKEY1, the first Tkey TKEY1, and the encryption algorithm (e.g., AES-XTS). The first device physical address DPA1 and the first encrypted data EDATA1 may be provided to a memory controller among the plurality of memory controllers 324, the memory controller corresponding to the selected memory encryption engine.

A corresponding memory controller among the plurality of memory controllers 324 may output a command address signal CMD/ADD and the first encrypted data EDATA1.

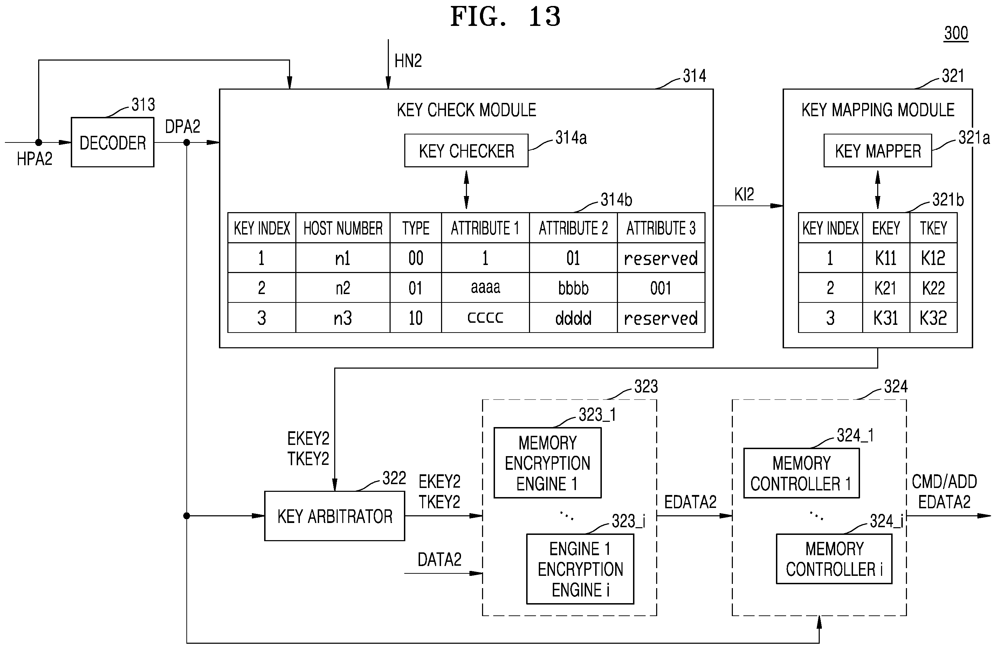

FIG. 13 is a diagram for describing an example in which data is encrypted by using range-based memory encryption.

Referring to FIG. 13, when the second device uses the range-based memory encryption, a write request provided by the second host device may include the second host physical address HPA2 and the second host data HN2.

The decoder 313 may decode the second host physical address HPA2 into the second device physical address DPA2.

The key check module 314 may receive the second device physical address DPA2, the second host data HN2, and the second host physical address HPA2. The key checker 314a may, after checking the value of the second host data HN2, search for a value (e.g., "2") of the second key index KI2 stored in the second entry of the key index table 314b by using values (e.g., "aaaa," "bbbb," and "001") of the second host physical address HPA2, and may provide the second key index KI2, which has been searched for, to the key mapping module 321.

The key mapper 321a may search for values (e.g., "K21" and "K22") of the second keys (i.e., the second Ekey EKEY2 and the second Tkey TKEY2) in the key table 321b by using the value of the second key index KI2. The second keys (i.e., the second Ekey EKEY2 and the second Tkey TKEY2) returned by the key table 321b may be provided to the key arbitrator 322.

The key arbitrator 322 may select a memory encryption engine corresponding to the second device physical address DPA2 from among the plurality of memory encryption engines 323, and may provide second keys (i.e., the second Ekey EKEY2 and the second Tkey TKEY2) to the selected memory encryption engine.

The memory encryption engine selected from among the plurality of memory encryption engines 323 may encrypt the second data DATA2 by using the second keys (i.e., the second Ekey EKEY2 and the second Tkey TKEY2), and the encryption algorithm, and may output the second encrypted data EDATA2.

Among the plurality of memory controllers 324, a corresponding memory controller may receive the second device physical address DPA2, and may output the command address signal CMD/ADD and the second encrypted data EDATA2.

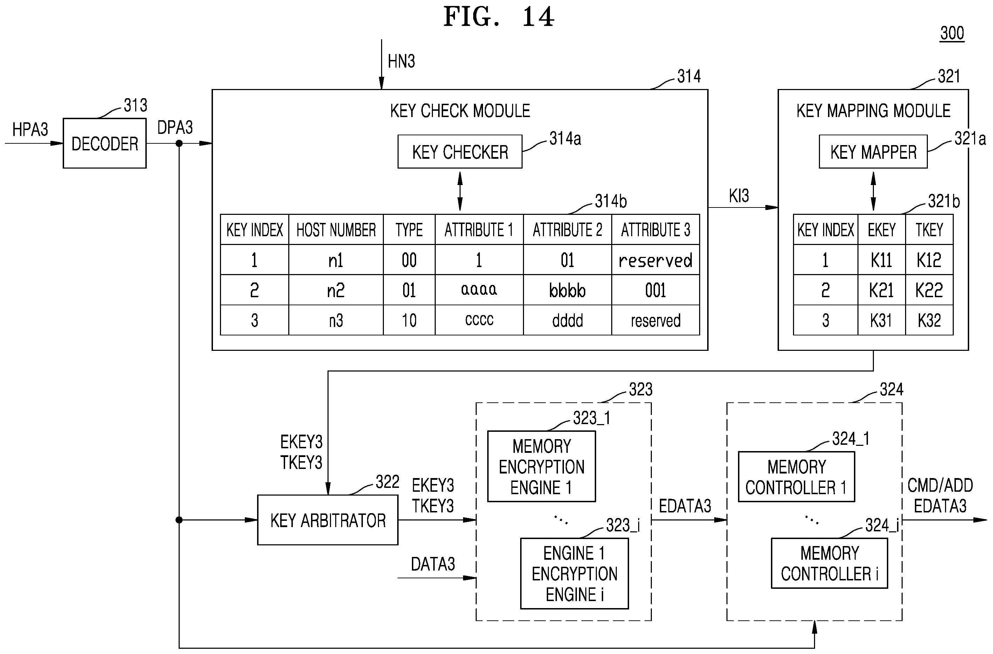

FIG. 14 is a diagram for describing an example in which data is encrypted by using device physical address-based memory encryption.

Referring to FIG. 14, when the third host device uses the device physical address-based memory encryption, a write request provided by the third host device may include the third host physical address HPA3 and the third host data HN3 without memory encryption. In an implementation, the third host physical address HPA3 may also be delivered to the key check module 314 through the host interface 111.

The decoder 313 may decode the third host physical address HPA3 into the third device physical address DPA3. The key checker 314a may search for a value (e.g., "3") of the third key index KI3 in the key index table 314b by using values (e.g., "cccc" and "dddd") of the third device physical address DPA3. The key mapper 321a may, in the key table 321b, search for values (e.g., "K31" and "K32") of third keys (i.e., a third Ekey EKEY3 and a third Tkey TKEY3) corresponding to the value of the third key index KI3. The key arbitrator 322 may provide the third keys (i.e., the third Ekey EKEY3 and the third Tkey TKEY3) to a memory encryption engine corresponding to the third device physical address DPA3 among the plurality of memory encryption engines 323. The memory encryption engine selected from among the plurality of memory encryption engines 323 may generate the third encrypted data EDATA3, based on the third data DATA3, the third keys (i.e., the third Ekey EKEY3 and the third Tkey TKEY3), and the encryption algorithm. A corresponding memory controller among the plurality of memory controllers 324 may receive the third device physical address DPA3, and may output the command address signal CMD/ADD and the third encrypted data EDATA3.

FIG. 15 is a ladder diagram for describing an example of a method of providing decrypted data.

Referring to FIG. 15, in S1510, the host device 710 may transmit a read request, and the CXL sub-system controller 720 may receive the read request.

In some implementations, the read request may include a host physical address and host data. In an implementation, the read request may further include CKID data.

In an implementation, the CXL sub-system controller 720 may be configured to receive the first host data and the first host physical address from a first host device.

In some implementations, the CXL sub-system controller 720 may be configured to receive the CKID data, the second host data, and the second host physical address from the second host device.

In some implementations, the CXL sub-system controller 720 may be configured to receive the third host data and the third host physical address from the third host device, by using the TSP defined in the CXL standard.

As S1520 to S1560 are identical to S1130 to S1170 shown in FIG. 11, descriptions and various implementations thereof will not be given.

In S1570, the memory sub-system controller 730 may provide the command address signal to the volatile memory 740. In this case, the command address signal may include a read command.

In S1580, the memory sub-system controller 730 may receive the encrypted data from the volatile memory 740.

In S1590, the memory sub-system controller 730 may perform an encryption operation by using at least one key and the encryption algorithm. For example, the encryption operation may include an operation of decrypting the encrypted data provided from the volatile memory 740.

In S1591, the memory sub-system controller 730 may provide the decrypted data to the host device 710.

The memory sub-system controller 730 according to an implementation may be configured to perform the encryption operation, based on the at least one first key and the encryption algorithm.

The memory sub-system controller 730 according to another implementation may be configured to execute CKID-based memory encryption defined in the CXL standard, based on the at least one second key and the encryption algorithm.

The memory sub-system controller 730 according to another implementation may be configured to perform range-based memory encryption defined in the CXL standard, based on the at least one third key and the encryption algorithm.

According to the implementations described above, the memory encryption may be supported even in a non-TSP environment, by generating and allocating a key used for the device physical address-based memory encryption. Accordingly, the security of the CXL device 100 may be enhanced.

According to the implementations described above, the memory encryption may be supported without being dependent to the host, even in a multi-host environment, a memory pooling environment, and a shared memory environment (e.g., LD-FAM and G-FAM) defined in the CXL standard.

It would be obvious to one of ordinary skill that the structure of the present disclosure may be variously modified within the scope of the present disclosure. Considering the descriptions, when the modifications of the present disclosure within the following claims and the category of equivalents, it will be considered that the present disclosure encompasses modification of the present disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

Implementations have been disclosed in the accompanying drawings and the present specifications. Although the implementations have been described by using specific terms, this is only to provide descriptions of the present disclosure and is not to limit the meanings or the scope of the present disclosure written in the following claims. Therefore, it will be understood to one of ordinary skill that various implementations and other equivalent implementations may be made therefrom. Accordingly, the technical scope of the present disclosure will be defined by the following claims.

While the present disclosure has been shown and described with reference to implementations thereof, it will be understood that various changes in form and details may be made therein without departing from the scope of the following claims.

## Claims

1. A Compute Express Link, CXL, device (100) comprising:
a volatile memory (120) connected to a plurality of channels (140); and
a CXL controller (110, 300) configured to:
receive first host data, first data, and a first host physical address from a first host device (10) among a plurality of host devices (20_1 to 20_n), and
provide a command address signal and first encrypted data to the volatile memory (120) through a channel among the plurality of channels (140),
wherein the CXL controller (110, 300) comprises:
a CXL sub-system controller (112, 310) configured to:
obtain a first key index based on at least one key index table (314b), the first host data, and a first device physical address mapped to the first host physical address, the first key index being set for the first host device (10), and
output the first device physical address and the first key index; and
a memory sub-system controller (113, 320) configured to:
obtain at least one first key based on a key table (321b) and the first key index, the at least one first key being set for the first host device (10), the key table (321b) being set for each key index of a plurality of key indices of the at least one key index table (314b), and
generate the first encrypted data based on the first data, the first device physical address, the at least one first key, and an encryption algorithm.

2. The CXL device (100) of claim 1, wherein the CXL sub-system controller (112, 310) comprises:
a decoder (313) configured to decode the first host physical address into the first device physical address based on an address mapping table (313a); and
a key check module (314) configured to search for the first key index in the at least one key index table (314b) based on the first host data, the first device physical address, and a search algorithm.

3. The CXL device (100) of claim 1 or 2, wherein the memory sub-system controller (113, 320) comprises:
a key mapping module (321) configured to search for the at least one first key in the key table (321b) based on the first key index and a search algorithm;
a plurality of memory encryption engines (323) configured to output the first encrypted data based on the first data, the at least one first key, and the encryption algorithm; and
a key arbitrator (322) configured to provide the at least one first key to a memory encryption engine of the plurality of memory encryption engines (323), the memory encryption engine being selected, according to the first device physical address, from the plurality of memory encryption engines.

4. The CXL device (100) of any preceding claim, wherein the at least one key index table (314b) comprises a first plurality of values of the plurality of key indices, a second plurality of values of a plurality of memory encryption types, and a third plurality of values of a plurality of host device attributes.

5. The CXL device (100) of any preceding claim, wherein the key table (321b) comprises:
for each key index of the plurality of key indices, a first value of a data encryption key and a second value of a tweak key, the tweak key being defined in an Advanced Encryption Standard, AES, encryption algorithm standard.

6. The CXL device (100) of any preceding claim, wherein the CXL sub-system controller (112, 310) is configured to:
receive, from a second host device among the plurality of host devices (20_1 to 20_n), Context Key Identifier, CKID, data, second host data, and a second host physical address,
obtain a second key index based on the at least one key index table (314b), the CKID data, and the second host data, the second key index being set for the second host device, and
wherein the memory sub-system controller (113, 320) is configured to:
obtain at least one second key based on the second key index and the key table (321b), the at least one second key being set for the second host device, and
generate second encrypted data based on CKID-based memory encryption defined in the CXL standard, the at least one second key, and the encryption algorithm.

7. The CXL device (100) of any preceding claim, wherein the CXL sub-system controller (112, 310) is configured to:
receive, from a third host device among the plurality of host devices (20_1 to 20_n), third host data and a third host physical address using Trusted Execution Environment, TEE, Security Protocol, TSP, defined in the CXL standard, and
obtain a third key index based on the at least one key index table (314b), the third host physical address, and the third host data, the third key index being set for the third host device, and
wherein the memory sub-system controller (113, 320) is configured to:
obtain at least one third key based on the third key index and the key table (321b), the at least one third key being set for the third host device, and
generate third encrypted data based on range-based memory encryption defined in the CXL standard, the at least one third key, and the encryption algorithm.

8. The CXL device (100) of any preceding claim, wherein the CXL sub-system controller (112, 310) is configured to:
receive fourth host data and a fourth physical address from a fourth host device among the plurality of host devices (20_1 to 20_n),
allocate a fourth device physical address corresponding to the fourth host physical address,
generate at least one fourth key corresponding to the fourth device physical address, and
store, in the at least one key index table (314b), a fourth key index corresponding to the at least one fourth key, the fourth host data, and the fourth device physical address, and
wherein the memory sub-system controller (113, 320) is configured to store, in the key table (321b), the fourth key index and the at least one fourth key.

9. The CXL device (100) of claim 8, wherein the CXL sub-system controller (112, 310) comprises:
an allocator (311) configured to allocate the fourth device physical address based on an address mapping table (313a);
a processor (312) configured to:
generate the at least one fourth key based on the fourth host data, and
output fourth type data indicating a type of device physical address-based memory encryption, the fourth host data, the fourth device physical address, and the at least one fourth key; and
a key check module (314) configured to:
store, in the at least one key index table (314b), the fourth key index, the fourth type data, the fourth host data, and the fourth device physical address, and
return the fourth key index to the processor (312).

10. An operating method of a Compute Express Link, CXL, device (100) comprising a volatile memory (120) and a CXL controller (110, 300), the operating method comprising:
receiving first host data and a first host physical address from a first host device (10);
converting the first host physical device into a first device physical address for the volatile memory (120);
obtaining a first key index based on at least one key index table (314b), the first host data, and the first device physical address, the first key index being set for the first host device (10);
obtaining at least one first key based on a key table (321b) and the first key index, the at least one first key being set for the first host device (10), the key table (321b) being set for each key index of a plurality of key indices of the at least one key index table (314b); and
performing an encryption operation based on the at least one first key and an encryption algorithm.

11. The operating method of claim 10, comprising:
performing Context Key Identifier, CKID, -based memory encryption defined in a CXL standard based on a request of a second host device, wherein performing the CKID-based memory encryption comprises:
receiving, from the second host device, CKID data, second host data, and a second host physical address;
obtaining a second key index based on the at least one key index table (314b), the CKID data, and the second host data, the second key index being set for the second host device;
obtaining at least one second key based on the second key index and the key table (321b), the at least one second key being set for the second host device; and
performing the encryption operation based on the at least one second key and the encryption algorithm.

12. The operating method of claim 10 or 11, comprising:
performing range-based memory encryption defined in a CXL standard based on a request from a third host device, wherein performing the range-based memory encryption comprises:
receiving, from the third host device, third host data and a third host physical address by using Trusted Execution Environment, TEE, Security Protocol, TSP, defined in the CXL standard;
obtaining a third key index based on the at least one key index table (314b), the third host physical address, and the third host data, the third key index being set for the third host device;
obtaining at least one third key based on the third key index and the key table (321b), the at least one third key being set for the third host device; and
performing the encryption operation based on the at least one third key and the encryption algorithm.

13. The operating method of any of claims 10 to 12, wherein the at least one key index table (314b) comprises a first plurality of values of the plurality of key indices, a second plurality of values of a plurality of memory encryption types, and a third plurality of values of a plurality of host device attributes.

14. The operating method of any of claims 10 to 13, wherein the key table (321b) comprises:
for each key index of the plurality of key indices, a first value of a data encryption key and a second value of a tweak key, the tweak key being defined in an Advanced Encryption Standard, AES, encryption algorithm standard.

15. The operating method of any of claims 10 to 14, wherein performing the encryption operation comprises:
encrypting first data from the host device (10); and
decrypting first encrypted data from the volatile memory (120).
